# EUROPEAN PATENT SPECIFICATION

(11) **EP 4 260 958 B1**
(45) Date of publication and mention of the grant of the patent: **18.06.2025**
(21) Application number: 21948406.0
(22) Date of filing: 01.07.2021
(51) Int. Cl.: B21B 38/00, G01N 21/892, B21B 1/24

(54) **ABNORMALITY DETECTION DEVICE AND ABNORMALITY DETECTION METHOD**
ANOMALIEDETEKTIONSVORRICHTUNG UND ANOMALIEDETEKTIONSVERFAHREN
DISPOSITIF DE DÉTECTION D'ANOMALIE ET PROCÉDÉ DE DÉTECTION D'ANOMALIE

(43) Date of publication of application: 18.10.2023
(73) Proprietor: Primetals Technologies Japan, Ltd., Hiroshima-shi, Hiroshima 733-8553 (JP)
(72) Inventor: MOCHIZUKI Chitoshi, Hiroshima-shi, Hiroshima 733-8553 (JP); OMURA Akihiro, Hiroshima-shi, Hiroshima 733-8553 (JP); KANEMORI Shinya, Tokyo 100-8332 (JP); YAMADA Masahiro, Tokyo 100-8332 (JP)
(74) Representative: Strehl & Partner mbB
(86) International application number: PCT/JP2021/024919
(87) International publication number: WO 2023/276102

(56) References cited:
- WO-A1-2020/067262
- JP-A- 2006 194 801
- JP-A- 2010 038 759
- JP-A- 2010 078 574
- JP-A- 2010 078 574
- JP-A- 2010 266 430
- JP-A- 2012 047 673
- JP-A- 2019 207 114
- JP-A- H06 167 576
- JP-A- H06 167 576
- JP-B1- 6 808 888
- TAKAHIKO OHSHIGE: "Sensing and information analysis technology for diagnostics and evaluations. Perspectives on the current situation and on the future: Automatic inspection technology for quality evaluation of steel products", JOURNAL OF THE SOCIETY OF INSTRUMENT AND CONTROL ENGINEERS, vol. 55, no. 3, 29 February 2016 (2016-02-29), pages 228 - 233, XP009542377, ISSN: 0453-4662, DOI: 10.11499/sicejl.55.228

## Description

### Technical Field

The present invention relates to an abnormality detecting apparatus and an abnormality detecting method.

### Background Art

As an example of surface inspection apparatus for accurately determining a texture signal of a flawless surface portion and accurately and efficiently setting a determination threshold value for a production line, Patent Document 1 discloses a surface inspection apparatus for detecting a surface flaw of a metal sheet that is traveling. The disclosed surface inspection apparatus has a threshold value calculating section that includes a concentration histogram calculating section for determining a concentration histogram of each unit area from an image signal, a standard deviation calculating section for determining a peak position of the concentration histogram, estimating a normal distribution function whose average value is represented by the peak position, and determining a standard deviation value of the estimated normal distribution function from the frequency near the peak position of the concentration histogram, and a threshold value setting section for setting a determining threshold value corresponding to the standard deviation value. The threshold value calculating section determines a determination threshold value such that any flaw signal components other than a texture signal component contained in the standard deviation value is minimized.

### Prior Art Document

### Patent Document

Patent Document 1: JP-2010-85096-A

### Summary of the Invention

### Problem to be Solved by the Invention

In finishing hot rolling mills, as increase in cases where strips are rolled into thinner under higher loads, occurrence of a phenomenon referred to as rolled strip pinching (called "rolling abnormality") due to an abrupt meandering behavior of the strip increases when the trailing end of the strip passes through the rolling mill after the strip has been released from a backward tension. Because of the rolled strip pinching phenomenon, the rolls are likely to suffer surface defects that lead to an increase in the number of times that the rolls are to be replaced, resulting in a possibility that the product yield will be reduced.

At present, it is customary to avoid the rolled strip pinching phenomenon by taking actions such as bending and leveling interventions based on the visual observation by the operator. However, the practice depends largely on the skill of the operator. If a rolled strip pinching event (rolling abnormality) can be detected by a computerized image processing process using monitoring image information that the operator is viewing, then early intervening actions can be taken, making it possible to increase the probability that subsequent rolling abnormalities and facility failures will be prevented from occurring beforehand.

The rolled strip pinching phenomenon refers to an event in which when a metal sheet passes through a rolling mill, the metal sheet is rolled while being folded and overlapped back on itself.

When the folded and overlapped portion of the strip is rolled, it is heated to a higher temperature than the other regions of the strip, exhibiting a higher level of luminance than the normal strip surface regions. The luminance difference makes it possible to detect the rolling abnormality.

In order to detect a rolling abnormality such as a rolled strip pinching phenomenon or the like in the hot rolling process, a camera may be used to monitor the image of the surface of a strip and an abnormality of the strip may be detected when the level of luminance on the surface of the strip exceeds a certain threshold value and the area exhibiting the excessive level of luminance has increased.

For example, Patent Document 1 discloses that when the area where white pixels are distributed in an image generated by binarizing the image of a trailing end of a strip that is detected by trailing end detecting means is equal to or larger than a predetermined area, the trailing end is detected as suffering squeezing.

According to the technology disclosed in Patent Document 1, the image is assessed in terms of the shades of two colors of white and black. However, the luminance distribution of an actual image and the colors of white and black are widely different from each other, and a study conducted by the inventors of the present invention have made it clear that the disclosed technology remains to be refined for accurately detecting abnormalities.

JP 2010 266430 A discloses a defect inspection apparatus with the features in the preamble of present claim 1. Other conventional devices and methods are described in JP 6 808888 B1, JP H06 167576 A, and JP 2010 078574 A.

It is an object of the present invention to provide an abnormality detecting apparatus and an abnormality detecting method that are capable of increasing the accuracy with which to detect rolling abnormalities of strips compared with the conventional art.

### Means for Solving the Problem

For achieving the above object, the present invention provides the apparatus and method as defined in the appended independent claims.

### Advantages of the Invention

According to the present invention, it is possible to increase the accuracy with which to detect rolling abnormalities of metal sheets compared with the conventional art. Other objects, structures, and advantages than those described above will become apparent from the description of an embodiment given below.

### Brief Description of the Drawings

FIG. 1 is a schematic diagram illustrating the configuration of a Rolling facility incorporating an abnormality detecting apparatus according to an embodiment of the present invention.
FIG. 2 is a schematic diagram illustrating the configuration of the abnormality detecting apparatus according to the embodiment.
FIG. 3 is a view illustrating the manner in which a range of a workpiece is extracted from an image by the abnormality detecting apparatus according to the embodiment.
FIG. 4 is a set of diagrams illustrating an example of luminance (RGB) histograms of pixels in a strip range in an image that is generated by the abnormality detecting apparatus according to the embodiment.
FIG. 5 is a diagram illustrating an example of an extraction and determination process for an abnormal area that is performed by the abnormality detecting apparatus according to the embodiment.
FIG. 6 is a diagram illustrating the example of the extraction and determination process for an abnormal area that is performed by the abnormality detecting apparatus according to the embodiment.
FIG. 7 is a view illustrating the sequence of a process of calculating an abnormal area as a reflecting light area that is by the abnormality detecting apparatus according to the embodiment.
FIG. 8 is a view illustrating the sequence of the process of calculating an abnormal area as a reflecting light area that is by the abnormality detecting apparatus according to the embodiment.
FIG. 9 is a view illustrating the sequence of the process of calculating an abnormal area as a reflecting light area that is performed by the abnormality detecting apparatus according to the embodiment.
FIG. 10 is a flowchart of an abnormality determining process that is performed by the abnormality detecting apparatus according to the embodiment.

### Modes for Carrying Out the Invention

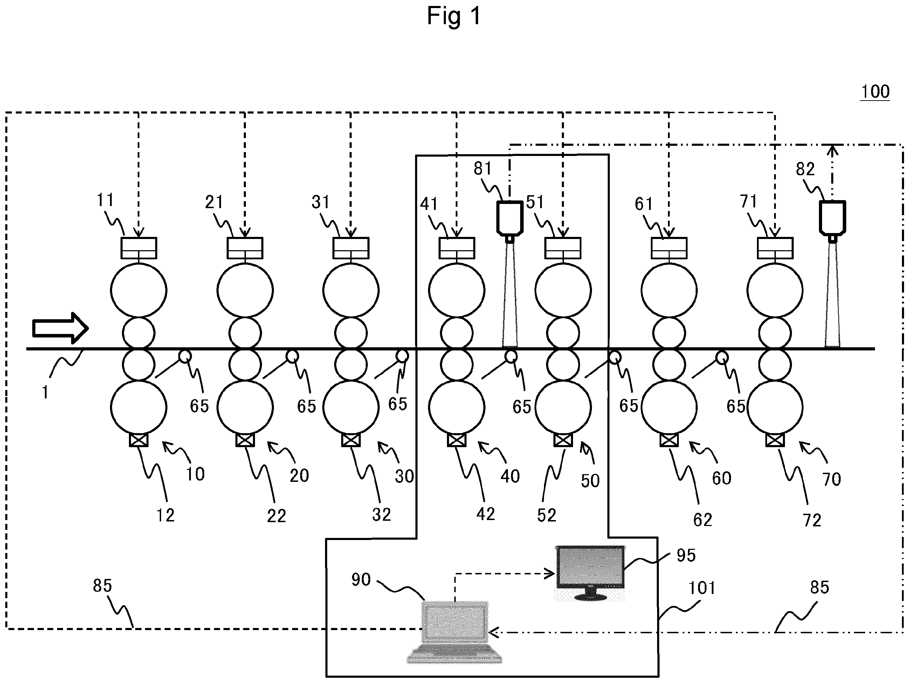

An abnormality detecting apparatus and an abnormality detecting method according to an embodiment of the present invention will be described below with reference to FIGS. 1 through 10. In the drawings referred to in the present description, those components that are identical or correspond to each other are denoted by identical or similar reference characters, and may be omitted from repetitive description.

A metal sheet as a material to be rolled as referred to in the present invention generally includes a strip of metal material that can be rolled, and is not limited to any particular kind, but may be a steel or of a nonferrous material such as aluminum or copper.

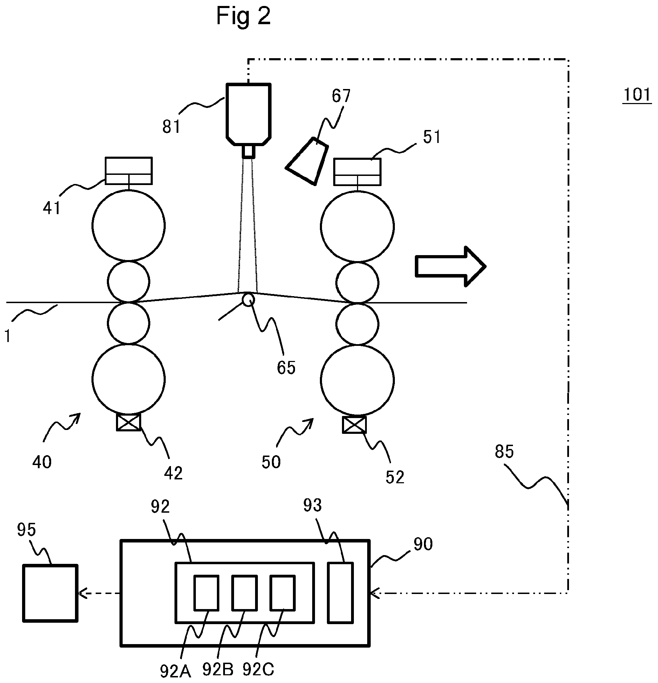

First, the overall configuration of a Rolling facility incorporating the abnormality detecting apparatus and the configuration of the abnormality detecting apparatus will be described below with reference to FIGS. 1 and 2. FIG. 1 is a schematic diagram illustrating the configuration of the abnormality detecting apparatus according to the present embodiment and the Rolling facility incorporating the abnormality detecting apparatus, and FIG. 2 is a schematic diagram illustrating the configuration of the abnormality detecting apparatus.

A Rolling facility 100 illustrated in FIG. 1 is a finishing Rolling facility for rolling a workpiece 1, and includes an F1 stand 10, an F2 stand 20, an F3 stand 30, an F4 stand 40, an F5 stand 50, an F6 stand 60, an F7 stand 70, cameras 81 and 82, loopers 65 for tension control, an image processing computer 90, a display apparatus 95, etc.

Of these components, the cameras 81 and 82, illumination apparatus 67 (see FIG. 2), and the image processing computer 90 jointly configure the abnormality detecting apparatus, denoted by 101 in FIG. 2.

The Rolling facility 100 is not limited to the design including the seven rolling stands as illustrated in FIG. 1, but may have at least one stand.

Each of the F1 stand 10, the F2 stand 20, the F3 stand 30, the F4 stand 40, the F5 stand 50, the F6 stand 60, and the F7 stand 70 is a rolling mill including an upper work roll, a lower work roll, an upper backup roll supporting the upper work roll in contact therewith, a lower backup roll supporting the lower work roll in contact therewith, a reduction cylinder 11, 21, 31, 41, 51, 61, 71 disposed above the upper backup roll, and a load detector 12, 22, 32, 42, 52, 62, 72. Each of the stands may be of a six-high mill structure further including upper and lower intermediate rolls disposed between the upper and lower work rolls and the upper and lower backup rollers. The roll configuration of the rolling mill is not limited to the above structure, but may include a minimum of upper and lower work rolls.

The loopers 65 includes rolls for line tension control. The rolls have their rotational shafts extending widthwise across the workpiece 1, and are disposed between the F1 stand 10 and the F2 stand 20, between the F2 stand 20 and the F3 strand 30, between the F3 stand 30 and the F4 stand 40, between the F4 stand and the F5 stand, and between the F5 stand and the F6 stand, and between the F6 stand and the F7 stand, such that changing the line tension by lifting the workpiece 1 vertically upwardly and lowering the workpiece 1 vertically downwardly are possible. The loopers 65 may also include a function as a strip shape meter for detecting the tension distribution transversely across the workpiece 1.

The camera 81 is disposed in a position on the exit side of the F4 stand 40 and the entry side of the F5 stand 50, where it can capture an image including the workpiece 1. The camera 81 captures images including the workpiece 1 from directly above the workpiece 1 or from obliquely above the workpiece 1 at intervals shorter than 0.1 second, for example, preferably in a moving image format. The data of the image captured by the camera 81 are transmitted through a communication line 85 to the image processing computer 90.

The camera 82 is disposed in a position on the exit side of the F7 stand 70, where it can capture an image including the workpiece 1. As with the camera 81, the camera 82 captures images including the workpiece 1 from directly above the workpiece 1 or from obliquely above the workpiece 1 at intervals shorter than 0.1 second, for example. The data of the image captured by the camera 82 are also transmitted through the communication line 85 to the image processing computer 90.

These cameras 81 and 82 carry out an image capturing process for capturing images including the workpiece 1.

The cameras are described as being disposed in two positions, i.e., on the exit side of the F4 stand 40 and the entry side of the F5 stand 50 and on the exit side of the F7 stand 70. However, a camera may be disposed in at least one position, one or two or more cameras may be incorporated, or cameras may be disposed between all the stands or on the entry and exist sides of the Rolling facility 100.

The illumination apparatus 67 illuminate the workpiece 1, particularly the ranges of the workpiece 1 whose images are captured by the cameras 81 and 82. The illumination apparatus 67 may include general illuminating facilities that are installed on the ceiling of a rolling plant that incorporates the Rolling facility 100, though it may be dedicated illumination apparatus.

The image processing computer 90 is a device configured by a computer for controlling operation of components of the Rolling facility 100. The image processing computer 90 has an image processing section 92, a database 93, etc.

The image processing section 92 is a section for dividing the luminance data in the range of the workpiece 1, from the images captured by the cameras 81 and 82, into three components of an R value, a G value, and a B value, and detecting a rolling abnormality on the surface of the workpiece 1 on the basis of the relationship between the luminance data of two components among the luminance data of the three components. The image processing section 92 is a main entity for carrying out an image processing process.

The image processing section 92 has a detection area setting section 92A, a reflected light area setting section 92B, an abnormal area setting section 92C, etc. The detection area setting section 92A is a section for setting a detection area of the workpiece 1 where an abnormality is to be detected, from the captured images. The reflected light area setting section 92B is a section for setting a reflecting light area where illuminating light emitted from the illumination apparatus 67 is reflected on the surface of the workpiece 1, from the captured images. The abnormal area setting section 92C is a section for detecting an abnormality on the surface using a reference value as a threshold value from the detection area and setting an area from which the reflecting light area has been removed as an abnormal area.

Details of the processing processes of the detection area setting section 92A, the reflected light area setting section 92B, and the abnormal area setting section 92C will be described later.

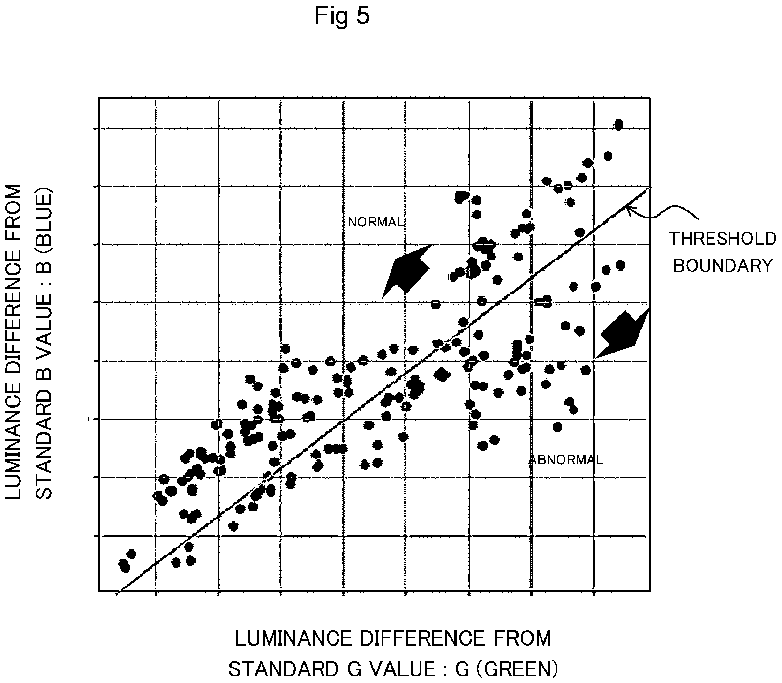

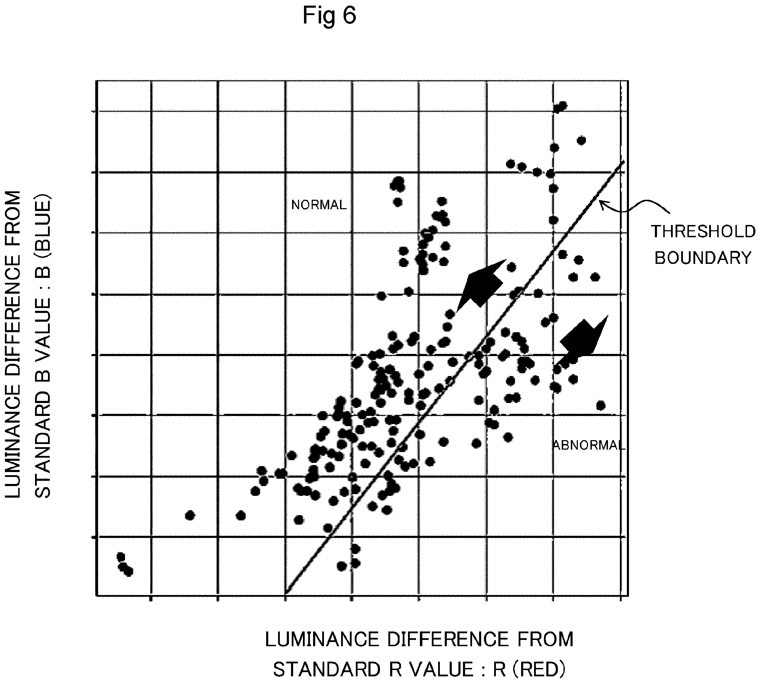

The database 93 is a storage device that stores information about a threshold value boundary determined beforehand for dividing a normal value and an abnormal value from each other, e.g., information about boundary lines illustrated in FIGS. 5 and 6, from the distribution produced by plotting, on a two-dimensional graph of two components, luminance data of one component and luminance data of another component among the luminance of the R (red) value, the G (green) value, and the B (blue) value of pixels in the range of the workpiece 1 in the image including the workpiece 1. Preferably, the database 93 is implemented by an SSD or an HDD.

The display apparatus 95 includes a display unit such as a display and an acoustic unit such as an alarm. The display apparatus 95 is a device that, when the image processing computer 90 decides that a strip shape abnormality has occurred, for example, indicates the occurrence of the strip shape abnormality and a process of dealing with the strip shape abnormality to the operator. Therefore, a display is often used as the display apparatus 95.

The operator confirms whether there is a rolling abnormality such as a rolled strip pinching phenomenon by seeing the display screen of the display apparatus 95, the stands themselves, and the spaces between the stands while the Rolling facility 100 is in operation. For example, when the operator confirms that a rolled strip pinching phenomenon has occurred as displayed on the display apparatus 95 and actions to be taken such as bending correction, leveling correction, rolling speed correction, and the opening of a rolling gap in a downstream stand are displayed on the display apparatus 95, the operator manually takes the actions according to the instructions to avoid a transition from the rolling abnormality to a worse condition.

At the same time that the occurrence of a rolling abnormality such as the occurrence of a rolled strip pinching phenomenon is displayed on the display screen of the display apparatus 95 for the operator, a correction or stop signal for avoiding the rolling abnormality may be sent to a rolling mill controller for an action to be taken to avoid the rolling abnormality under automatic control. Alternatively, the occurrence of a rolling abnormality may not be displayed on the display apparatus 95, and the rolling mill controller may take various corrective actions or bring the rolling mill to a shutdown under automatic control.

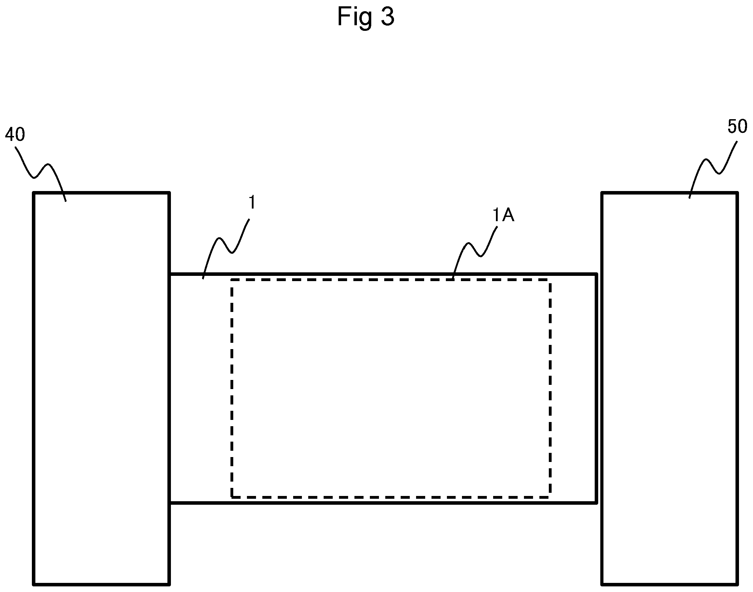

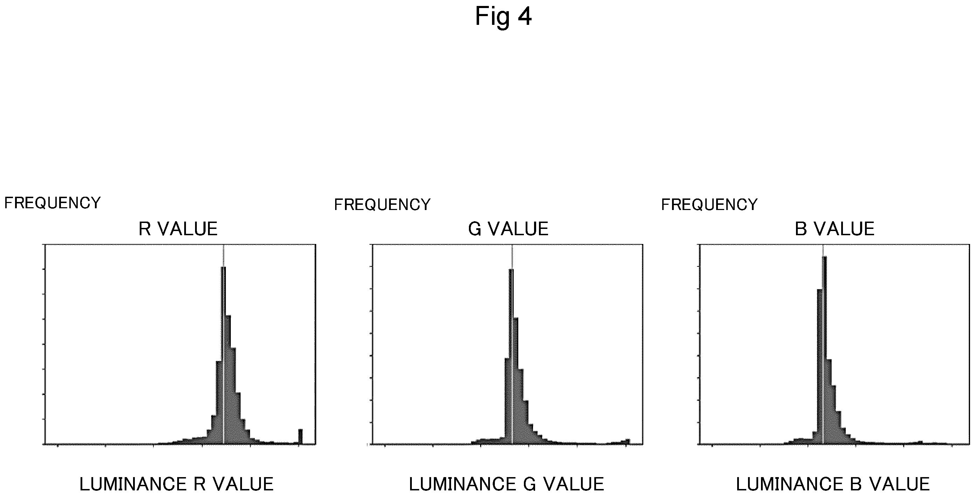

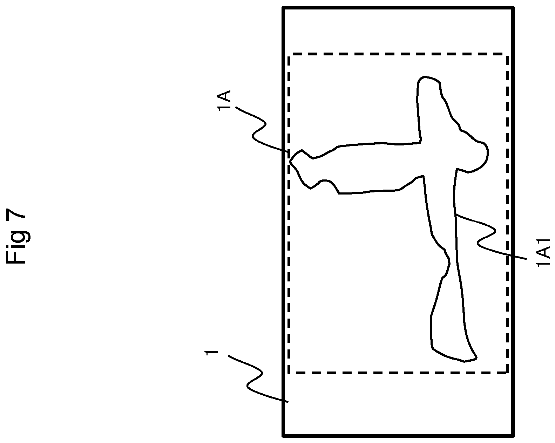

A specific example of an abnormality detecting process for deciding a strip shape abnormality of the workpiece 1 being rolled according to the present invention will be described below with reference to FIG. 3 and following figures. FIG. 3 is a view illustrating the manner in which a range of a workpiece is extracted from an image. FIG. 4 is a set of diagrams illustrating an example of luminance (RGB) histograms of pixels in a range of the workpiece from an image. FIGS. 5 and 6 are diagrams illustrating an example of an extraction and determination process for an abnormal area. FIGS. 7 through 9 are views illustrating the sequence of a process of calculating an abnormal area as a reflecting light area.

First, the cameras 81 and 82 capture images including the workpiece 1. The cameras 81 and 82 output the captured images via the communication line 85 to the image processing computer 90.

In the image processing computer 90, the image processing section 92 determines a background and an area where the workpiece 1 exists by way of a binarizing process from the image of the workpiece 1 being rolled, as illustrated in FIG. 3, and extracts a range 1A of the workpiece 1 from a luminance area whose luminance is equal to or higher than a certain threshold value. Thereafter, the image processing section 92 performs an abnormality detecting process on the extracted range 1A.

The extracted range 1A may include an area slightly inside or outside of the existing strip area, and may not necessarily coincide with the workpiece 1. However, since the position of the workpiece 1 whose image is captured may vary due to vertical fluctuations of the loopers 65, the range 1A should be extracted in a manner to follow the varying position of the workpiece 1.

Then, in the image processing computer 90, the image processing section 92 determines the luminance distribution in the range 1A of the workpiece 1 with respect to a selected one of the images. Specifically, the image processing section 92 divides the luminance (RGB) data of all pixels in the range 1A extracted as illustrated in FIG. 3 from one of the images captured by the cameras 81 and 82 into three components of the R value, the G value, and the B value, and determines the frequency distribution (histograms) of the luminance levels of the respective R value, G value, and B value represented by the numbers of measurement points. R, G, and B represent R: red, G: green, and B: blue, and each of R, G, and B takes a value in the range of 0 to 255. FIG. 4 illustrates an example of luminance (RGB) histograms of a strip range from one image.

Then, the image processing section 92 uses the value (central position: 50%) that bisects the area represented by integrated values of the respective distribution as luminance data of the respective RGB components where the workpiece is judged as free of abnormalities. One value may be selected in an allowable range of ±20% from the central position 50%, and may be used as luminance data of each of the RGB components. The allowable range is not necessarily be ±20%, but may appropriately be varied.

Instead of using the value that bisects the area, the luminance level (most frequent value) represented by the largest number of measurement points in the respective distribution may be used as luminance data of the respective RGB components where the workpiece is judged as free of abnormalities. Furthermore, one value may be selected in an allowable range of ±30% from the most frequent value, and may be used as luminance data of each of the RGB components. The allowable range is not necessarily be ±30%, but may appropriately be varied.

The value (position) used to determine the luminance data may be designated by the operator before the workpiece 1 from which an abnormality is to be detected is rolled, or may be preset in the abnormality detecting apparatus, or may be learned as an optimum value by way of machine learning.

The image processing section 92 detects a surface abnormality on the basis of the luminance data of one component, the luminance data of another component, and a threshold boundary. If a detected result obtained from the luminance data of two components as a combination from among the R value, the G value, and the B value and a threshold boundary determined from those luminance data indicates an abnormality and if a detected result obtained from the luminance data of two components as another combination and a threshold boundary determined from those luminance data indicates an abnormality, then the image processing section 92 detects as an abnormality.

For example, the image processing section 92 determines a detected result as to whether the luminance data of two components as a combination (the luminance data of the B value and the luminance data of the G value) as illustrated in FIG. 5 and a boundary determined from the luminance data indicate an abnormality or not, and determines a detected result as to whether the luminance data of two components as another combination (the luminance data of the B value and the luminance data of the R value) as illustrated in FIG. 6 and a boundary determined from the luminance data indicate an abnormality or not. More specifically, the image processing section 92 decides whether the plotted luminance data are on the abnormality side of the boundary line or not.

Thereafter, if both of the detected results indicate an abnormality, then the image processing section 92 detects as an abnormality.

Though not shown, the relationship between the luminance data of the G value and the luminance data of the R value can be used. The image processing section 92 should desirably use, of the three combinations, the luminance data of the G value and the B value and the luminance data of either one of the other two combinations.

While it has been described that two of the three combinations are used, the image processing section 92 may determine an abnormality using either one of the three combinations. Moreover, the image processing section 92 may detect as an abnormality if either one of two combinations is equal to or larger than a desired threshold boundary. Furthermore, the image processing section 92 may determine an abnormality using all of the three combinations. If all of the three combinations are used, then the image processing section 92 may detect as an abnormality if either one of them is equal to or larger than a desired threshold boundary. The image processing section 92 may detect as an abnormality if two of the combinations as a majority are equal to or larger than a desired threshold boundary or if all of the three combinations are equal to or larger than a desired threshold boundary. In these modifications, the luminance data of the G value and the B value may preferentially be used.

With respect to the desired threshold boundary lines illustrated in FIGS. 5 and 6, it is desirable that a plurality of image data representing normal and abnormal data be collected, and approximate formulas for separating luminance data be determined and stored in the database 93.

The desired threshold boundary line for separating luminance data can be drawn by the operator of the Rolling facility 100 or an employee of the manufacturer of the abnormality detecting apparatus on the basis of the resultant diagram, for example. Alternatively, normal and abnormal data may be classified using a mathematical technique, e.g., a data clustering technique (data classifying technique). In one technique, a linear formula may be determined in order to maximize the distance (margin) between the normal and abnormal data according to a binary classification technique based on the SVM (support vector machine) technique.

Next, details of removal of a reflecting light area due to the illumination apparatus 67 will be described below with reference to FIGS. 7 through 9.

As illustrated in FIG. 7, an abnormal area is of a shape represented by the luminance distribution along a rolling direction (conveyance direction). In contrast, an image that is actually captured by each of the cameras 81 and 82 includes a drawn part and reflected light area 1A1 representing a mixture of the abnormal area and a reflecting light area (that extends widthwise (vertical) across the strip in FIG. 7) due to the illumination apparatus 67. It is desirable to remove the reflecting light area due to the illumination apparatus 67 from the drawn part and reflected light area 1A1.

The illumination apparatus 67 emit nearly white light, and some squeezed portions look nearly yellow. Therefore, it is desirable to perform a binarizing process to extract and remove the light from illumination apparatus 67 on the basis of a nearly white luminance threshold value.

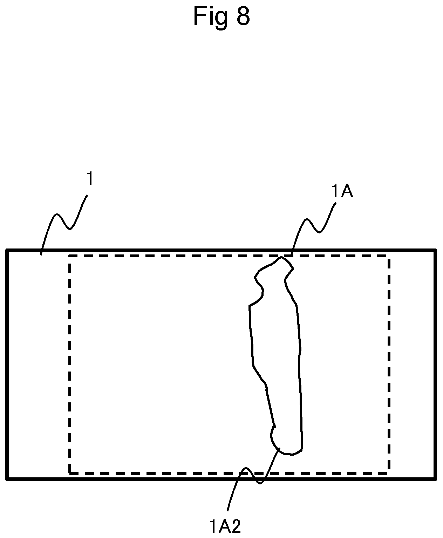

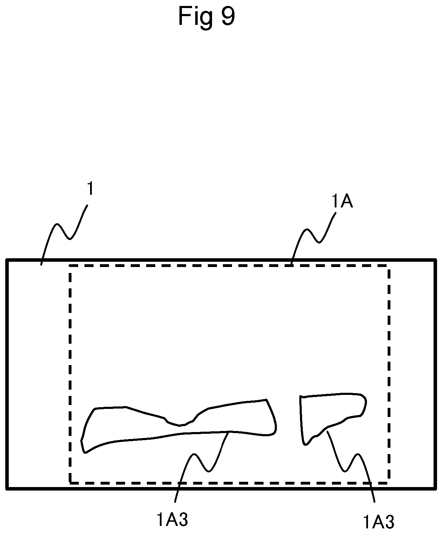

In the image processing section 92, the detection area setting section 92A sets an area determined as an abnormality according to the method illustrated in FIGS. 5, 6, etc. as the drawn part and reflected light area 1A1. Then, as illustrated in FIG. 8, the reflected light area setting section 92B extracts and removes a reflecting light area 1A2 that is relatively long widthwise across the strip and that is due to the illumination apparatus 67, thereby extracting only a true abnormal area 1A3 (area relatively long in the conveyance direction) as illustrated in FIG. 9. Thereafter, the abnormal area setting section 92C sets the detected true abnormal area 1A3 as an abnormal area, and goes to a process of finally detecting whether there is a rolling abnormality or not.

It has been described that the reflecting light area 1A2 due to the illumination apparatus 67 is removed from the drawn part and reflected light area 1A1 detected as a surface abnormality according to the procedure illustrated in FIG. 5, etc. However, the reflecting light area 1A2 due to the illumination apparatus 67 may first be removed after the range 1A of the strip has been detected, after which a rolling abnormal area may be set according to the process illustrated in FIG. 8, etc.

Thereafter, the image processing section 92 determines that the workpiece 1 is suffering a rolling abnormality if the total area value of the respective pixels in the abnormal area suitably set by removing the reflecting light area that is due to the illumination apparatus 67 or the abnormal area detected as the surface abnormality according to the method illustrated in FIG. 5, etc. or a value calculated by dividing the total value of the areas by the area of the overall range 1A of the workpiece 1 is larger than a certain threshold value (ε).

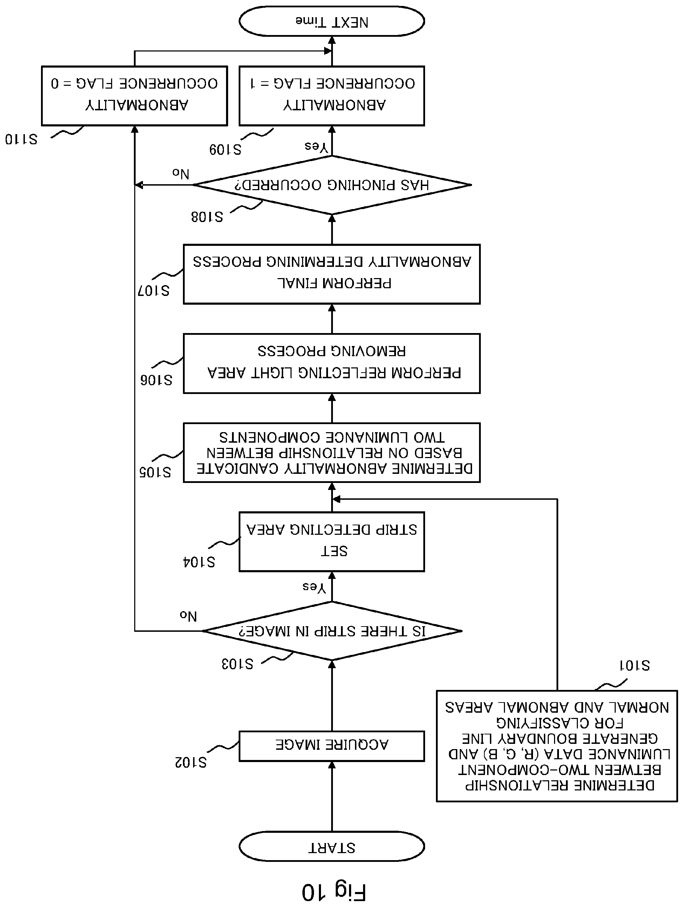

An abnormality detecting method of detecting a surface abnormality of the workpiece 1 that is rolled by the rolling mill according to the present embodiment will be described below with reference to FIG. 10. FIG 10 is a flowchart of an abnormality determining process that is performed by the abnormality detecting apparatus according to the present embodiment.

First, as illustrated in FIG. 10, before the workpiece 1 is actually rolled, the relationship (see FIGS. 5 and 6) of the luminance data (R, G, B) of two components is determined using data in the past, and also boundary lines for classifying normal and abnormal data are generated. The determined relationship and the generated boundary lines are recorded in the database 93 (step S101).

When the workpiece 1 is rolled, the cameras 81 and 82 acquire images (step S102). Step S102 corresponds to an image capturing step.

Then, the image processing section 92 in the image processing computer 90 determines whether the workpiece 1 exists in the images captured in step S102 or not (step S103). If it is determined that the workpiece 1 exists, then the processing goes to step S104. If it is determined that the workpiece 1 does not exist, then the processing goes to step S110.

Thereafter, the image processing section 92 sets a strip detecting area (step S104), and then determines an abnormality candidate based on the relationship between the two luminance components (step S105). Preferably, at this time, the image processing section 92 performs a process of removing a reflecting light area due to the illumination apparatus 67 (step S106).

Thereafter, the image processing section 92 performs a final abnormality determining process (step S107), and determines whether a rolling abnormality such as squeezing is occurring or not (step S108). If it is determined that a rolling abnormality is occurring, then the processing goes to step S109. If it is determined that a rolling abnormality is not occurring, then the processing goes to step S110. Steps S104 through S108 correspond to an image processing step.

If it is determined that a rolling abnormality is occurring in step S108, then the image processing section 92 records an abnormality occurrence flag = 1 (step S109). If it is determined that the workpiece 1 does not exist in step S103 or if it is determined that a rolling abnormality is not occurring in step S108, then the image processing section 92 records an abnormality occurrence flag = 0 (step S110). The processing sequence is started again at a next timing.

The image processing computer 90, when the abnormality occurrence flag = 1 is recorded, displays something to that effect on the display apparatus 95. Alternatively, the image processing computer 90 automatically performs an intervening process on each of the stands 10, 20, 30, 40, 50, 60, and 70.

Advantages of the present embodiment will now be described below.

The abnormality detecting apparatus according to the present embodiment described above is an apparatus for detecting a rolling abnormality on the surface of the workpiece 1 to be rolled by the rolling mill and includes the cameras 81 and 82 for capturing images of the workpiece 1 whose abnormality is to be detected and the image processing section 92 for dividing the luminance data of the pixels in the range of the workpiece 1 from the images captured by the cameras 81 and 82 into three components of the R value, the G value, and the B value, and detecting a rolling abnormality on the surface of the workpiece 1 on the basis of the relationship between the luminance data of two components among the luminance data of the three components.

Thus, since an abnormality can be decided in a composite manner using the luminance data of the two components on the basis of three primaries close to the luminance distribution of the actual image, the accuracy with which to detect a rolling abnormality of the workpiece 1 can be increased compared with the conventional art.

Furthermore, when the data of luminance of each of the groups of the R value and the G value, the G value and the B value, and the R value and the B value, which are combinations of the luminance data of two components, are plotted, the luminance data exhibit a tendency in which the data group representing a normal strip area and the data group representing an abnormal strip area are separate from each other along a certain boundary line. In view of such a tendency, the abnormality detecting apparatus further includes the database 93 where a threshold value boundary for dividing a normal value and an abnormal value from each other is predetermined from the distribution produced by plotting, on a two-dimensional graph of two components, a plurality of values including the luminance data of one component of the R value, the G value, and the B value of the image including the workpiece 1 and the luminance data of another component. The image processing section 92 detects a rolling abnormality on the surface of the workpiece 1 on the basis of the luminance data of the one component, the luminance data of the other component, and the threshold value boundary, so that the accuracy with which to detect an abnormality can be increased compared with deciding whether there is an abnormality or not using a threshold value determined per component.

Furthermore, the image processing section 92 uses the luminance differences between the G value and the B value. Inasmuch as the workpiece 1 is of a reddish color tone, if the R value is used, then the luminance levels of normal and abnormal areas do not significantly vary from each other, resulting in inadequacy of them for abnormality determination. Using the G value and the B value makes it possible to detect an abnormality without adversely affected by the background color of the workpiece 1.

Moreover, if a detected result obtained from the luminance data of two components as a combination from the R value, the G value, and the B value and a threshold boundary determined from those luminance data indicates an abnormality and if a detected result obtained from the luminance data of two components as another combination and a threshold boundary determined from those luminance data indicates an abnormality, then the image processing section 92 detects as a rolling abnormality. Thus, since the image processing section 92 uses two combinations of two components and determines that the surface of the workpiece 1 has an abnormality when both combinations detect abnormalities, the image processing section 92 is less likely to detect a normal area erroneously as an abnormal area. Therefore, the accuracy with which to detect an abnormality is further increased.

Furthermore, the abnormality detecting apparatus further includes the illumination apparatus 67 for illuminating the workpiece 1, and the image processing section 92 sets a detection area of the workpiece 1 from the latest image, sets a reflecting light area on the surface of the workpiece 1 due to the illuminating light from the illumination apparatus 67 from the latest image, sets the detection area from which the reflecting light area has been removed as a detection area again, and sets an abnormal area based on the relationship between the luminance data of the pixels in the detection area set again and the luminance differences thereof with the luminance reference value, thereby detecting a rolling abnormality. The image processing section 92 can thus extract a true surface abnormality from which the reflecting light area due to the illumination apparatus 67 has been removed. Therefore, the accuracy with which to detect an abnormality is further increased.

### <Others>

The present invention is not limited to the embodiment described above, but many modifications and applications may possibly be made with respect to the embodiment. The above embodiment has been described in detail for a better understanding of the present invention, and should not be construed as being limited to one including all the configurational details described above.

### Description of Reference Characters

1: Workpiece to be rolled (metal sheet)
1A: Extracted range of workpiece to be rolled
1A1: Drawn part and reflected light area
1A2: Reflected light area
1A3: Abnormal area
10: F1 Stand
11, 21, 31, 41, 51, 61, 71: Reduction cylinder
12, 22, 32, 42, 52, 62, 72: Load detector
20: F2 stand
30: F3 stand
40: F4 stand
50: F5 stand
60: F6 stand
61: Reduction cylinder
65: Looper for tension control
67: Illumination apparatus
70: F7 stand
71: Reduction cylinder
81, 82: Camera
85: Communication line
90: Image processing computer
92: Image processing section
92A: Detection area setting section
92B: Reflected light area setting section
92C: Abnormal area setting section
93: Database
95: Display apparatus
100: Rolling facility
101: Abnormality detecting apparatus

## Claims

1. An abnormality detecting apparatus configured to detect a rolling abnormality on a surface of a metal sheet (1) rolled by a rolling mill, the abnormality detecting apparatus comprising:
a camera (81, 82) configured to capture an image of the metal sheet (1) whose abnormality is to be detected; and
an image processing section (92) configured to divide luminance data of pixels in a range of the metal sheet (1) from the image captured by the camera (81, 82) into three components of an R value, a G value, and a B value,
**characterized in that**
the image processing section (92) is configured to detect a rolling abnormality on the surface of the metal sheet (1) on the basis of a relationship between the luminance data of two components among the luminance data of the three components; and **in that**
the abnormality detecting apparatus further comprises a database configured to store information about
a first threshold value boundary determined beforehand for dividing a normal value and an abnormal value from each other from a distribution produced by plotting, from a collected plurality of image data representing normal and abnormal data, on a two-dimensional graph of a combination of two components, luminance data of one component of an R value, a G value, and a B value of the combination of two components and luminance data of another component of the combination of two components, and
a second threshold value boundary determined beforehand for dividing a normal value and an abnormal value from each other from a distribution produced by plotting, from the collected plurality of image data, on a two-dimensional graph of another combination of two components, luminance data of one component of the other combination of two components and luminance data of another component of the other combination of two components,
wherein the image processing section (92) is configured to detect a rolling abnormality if a detected result obtained from the luminance data of the pixels in the range of the metal sheet (1) of the combination of two components from among the R value, the G value, and the B value and the first threshold value boundary indicates an abnormality and if a detected result obtained from the luminance data of the pixels in the range of the metal sheet (1) of the other combination of two components and the second threshold value boundary indicates an abnormality.

2. The abnormality detecting apparatus according to claim 1, wherein the image processing section (92) uses the luminance data of the G value and the B value.

3. The abnormality detecting apparatus according to claim 1 or 2, wherein
the abnormality detecting apparatus further includes an illumination apparatus (67) for illuminating the metal sheet (1), and
the image processing section (92) is configured to set a detection area of the metal sheet (1) from a latest image, set a reflecting light area on the surface of the metal sheet (1), the reflecting light area being due to illuminating light from the illumination apparatus (67), from the latest image, set an area obtained by removing the reflecting light area from the detection area, as a detection area again, and detect the rolling abnormality based on the luminance data of the pixels in the detection area set again.

4. An abnormality detecting method of detecting a rolling abnormality on a surface of a metal sheet (1) rolled by a rolling mill, the abnormality detecting method comprising:
an image capturing step of capturing by a camera (81, 82) an image of the metal sheet (1) whose abnormality is to be detected; and
an image processing step of dividing luminance data in a range of the metal sheet (1) from the image captured by the camera (81, 82) into three components of an R value, a G value, and a B value,
**characterized in that**
the image processing step includes detecting a rolling abnormality on the surface of the metal sheet (1) on the basis of a relationship between the luminance data of two components among the luminance data of the three components;
and **in that** the method further comprises a step of storing, in a database, information about
a first threshold value boundary determined beforehand for dividing a normal value and an abnormal value from each other from a distribution produced by plotting, from a collected plurality of image data representing normal and abnormal data, on a two-dimensional graph of a combination of two components, luminance data of one component of an R value, a G value, and a B value of the combination of two components and luminance data of another component of the combination of two components, and
a second threshold value boundary determined beforehand for dividing a normal value and an abnormal value from each other from a distribution produced by plotting, from the collected plurality of image data, on a two-dimensional graph of another combination of two components, luminance data of one component of the other combination of two components and luminance data of another component of the other combination of two components,
wherein the image processing step includes the step of detecting a rolling abnormality if a detected result obtained from the luminance data of the pixels in the range of the metal sheet (1) of the combination of two components from among the R value, the G value, and the B value and the first threshold value boundary indicates an abnormality and if a detected result obtained from the luminance data of the pixels in the range of the metal sheet (1) of the other combination of two components and the second threshold value boundary indicates an abnormality.

5. The abnormality detecting method according to claim 4, wherein the image processing step uses the luminance data of the G value and the B value.

6. The abnormality detecting method according to claim 4 or 5, wherein the image processing step includes the step of setting a detection area of the metal sheet (1) from a latest image, setting a reflecting light area on the surface of the metal sheet (1), the reflecting light area being due to illuminating light, from the latest image, setting an area obtained by removing the reflecting light area from the detection area, as a detection area again, and detecting the rolling abnormality based on the luminance data of the pixels in the detection area set again.

## Patentansprüche

1. Vorrichtung zum Detektieren von Anomalien, die dazu konfiguriert ist, Walzanomalien auf der Oberfläche eines durch ein Walzwerk gewalzten Metallblechs (1) zu detektieren, wobei die Vorrichtung zum Detektieren von Anomalien Folgendes umfasst:
eine Kamera (81, 82), die dazu konfiguriert ist, ein Bild des Metallblechs (1) aufzunehmen, dessen Anomalie zu detektieren ist; und
einen Bildverarbeitungsabschnitt (92), der dazu konfiguriert ist, Luminanzdaten von Pixeln in einem Bereich des Metallblechs (1) aus dem von der Kamera (81, 82) aufgenommenen Bild in drei Komponenten eines R-Werts, eines G-Werts und eines B-Werts zu unterteilen,
**dadurch gekennzeichnet, dass**
der Bildverarbeitungsabschnitt (92) dazu konfiguriert ist, eine Walzanomalie auf der Oberfläche des Metallblechs (1) auf der Grundlage einer Beziehung zwischen den Luminanzdaten von zwei Komponenten unter den Luminanzdaten der drei Komponenten zu detektieren; und dass
die Vorrichtung zum Detektieren von Anomalien ferner eine Datenbank umfasst, die dazu konfiguriert ist, Informationen zu speichern über
eine erste Schwellenwertgrenze, die im Voraus bestimmt wird, um einen normalen Wert und einen abnormen Wert voneinander zu trennen, aus einer Verteilung, die dadurch erzeugt wird, dass aus einer gesammelten Vielzahl von Bilddaten, die normale und abnorme Daten darstellen, auf einem zweidimensionalen Graphen einer Kombination von zwei Komponenten Luminanzdaten einer Komponente eines R-Werts, eines G-Werts und eines B-Werts der Kombination von zwei Komponenten und Luminanzdaten einer anderen Komponente der Kombination von zwei Komponenten aufgetragen werden, und
eine zweite Schwellenwertgrenze, die im Voraus bestimmt wird, um einen normalen Wert und einen abnormen Wert voneinander zu trennen, aus einer Verteilung, die durch Auftragen von Luminanzdaten einer Komponente der anderen Kombination von zwei Komponenten und Luminanzdaten einer anderen Komponente der anderen Kombination von zwei Komponenten aus der gesammelten Vielzahl von Bilddaten auf einem zweidimensionalen Diagramm erzeugt wird,
wobei der Bildverarbeitungsabschnitt (92) dazu konfiguriert ist, eine Walzanomalie zu detektieren, wenn ein detektiertes Ergebnis, das aus den Luminanzdaten der Pixel im Bereich des Metallblechs (1) der Kombination von zwei Komponenten aus dem R-Wert, dem G-Wert und dem B-Wert und der ersten Schwellenwertgrenze erhalten wurde, eine Anomalie anzeigt und wenn ein detektiertes Ergebnis, das aus den Luminanzdaten der Pixel im Bereich des Metallblechs (1) der anderen Kombination von zwei Komponenten und der zweiten Schwellenwertgrenze erhalten wurde, eine Anomalie anzeigt.

2. Vorrichtung zum Detektieren von Anomalien nach Anspruch 1, wobei der Bildverarbeitungsabschnitt (92) die Luminanzdaten des G-Werts und des B-Werts verwendet.

3. Vorrichtung zum Erkennen von Anomalien nach Anspruch 1 oder 2, wobei
die Vorrichtung zum Detektieren von Anomalien ferner eine Beleuchtungsvorrichtung (67) zum Beleuchten des Metallblechs (1) umfasst, und
der Bildverarbeitungsabschnitt (92) dazu konfiguriert ist, einen Detektionsbereich des Metallblechs (1) aus einem letzten Bild festzulegen, einen Reflexionslichtbereich auf der Oberfläche des Metallblechs (1), wobei der Reflexionslichtbereich auf Beleuchtungslicht von der Beleuchtungsvorrichtung (67) zurückzuführen ist, aus dem letzten Bild festzulegen, einen Bereich, der durch Entfernen des Reflexionslichtbereichs aus dem Detektionsbereich erhalten wird, erneut als einen Detektionsbereich festzulegen und die Walzanomalie basierend auf den Luminanzdaten der Pixel in dem erneut festgelegten Detektionsbereich zu detektieren.

4. Verfahren zum Detektieren von Anomalien auf der Oberfläche eines in einem Walzwerk gewalzten Metallblechs (1), wobei das Verfahren zum Detektieren von Anomalien Folgendes umfasst:
einen Bildaufnahmeschritt, bei dem eine Kamera (81, 82) ein Bild des Metallblechs (1) aufnimmt, dessen Anomalie zu detektieren ist; und
einen Bildverarbeitungsschritt des Aufteilens von Luminanzdaten in einem Bereich des Metallblechs (1) aus dem von der Kamera (81, 82) aufgenommenen Bild in drei Komponenten eines R-Werts, eines G-Werts und eines B-Werts,
**dadurch gekennzeichnet, dass**
der Bildverarbeitungsschritt das Detektieren einer Walzanomalie auf der Oberfläche des Metallblechs (1) auf der Grundlage einer Beziehung zwischen den Luminanzdaten von zwei Komponenten unter den Luminanzdaten der drei Komponenten umfasst;
und dass das Verfahren ferner einen Schritt umfasst, bei dem in einer Datenbank Informationen gespeichert werden über
eine erste Schwellenwertgrenze, die im Voraus bestimmt wird, um einen normalen Wert und einen abnormen Wert voneinander zu trennen, aus einer Verteilung, die dadurch erzeugt wird, dass aus einer gesammelten Vielzahl von Bilddaten, die normale und abnorme Daten darstellen, auf einem zweidimensionalen Graphen einer Kombination von zwei Komponenten Luminanzdaten einer Komponente eines R-Werts, eines G-Werts und eines B-Werts der Kombination von zwei Komponenten und Luminanzdaten einer anderen Komponente der Kombination von zwei Komponenten aufgetragen werden, und
eine zweite Schwellenwertgrenze, die im Voraus bestimmt wird, um einen normalen Wert und einen abnormen Wert voneinander zu trennen, aus einer Verteilung, die durch Auftragen von Luminanzdaten einer Komponente der anderen Kombination von zwei Komponenten und Luminanzdaten einer anderen Komponente der anderen Kombination von zwei Komponenten aus der gesammelten Vielzahl von Bilddaten auf einem zweidimensionalen Diagramm erzeugt wird,
wobei der Bildverarbeitungsschritt den Schritt des Detektierens einer Walzanomalie umfasst, wenn ein detektiertes Ergebnis, das aus den Luminanzdaten der Pixel im Bereich des Metallblechs (1) der Kombination von zwei Komponenten aus dem R-Wert, dem G-Wert und dem B-Wert und der ersten Schwellenwertgrenze erhalten wurde, eine Anomalie anzeigt und wenn ein detektiertes Ergebnis, das aus den Luminanzdaten der Pixel im Bereich des Metallblechs (1) der anderen Kombination von zwei Komponenten und der zweiten Schwellenwertgrenze erhalten wurde, eine Anomalie anzeigt.

5. Verfahren zum Detektieren von Anomalien nach Anspruch 4, wobei der Bildverarbeitungsschritt die Luminanzdaten des G-Werts und des B-Werts verwendet.

6. Verfahren zum Detektieren von Anomalien nach Anspruch 4 oder 5, wobei der Bildverarbeitungsschritt den Schritt des Festlegens eines Detektionsbereichs des Metallblechs (1) aus einem letzten Bild, des Festlegens eines Reflexionslichtbereichs auf der Oberfläche des Metallblechs (1), wobei der Reflexionslichtbereich auf Beleuchtungslicht zurückzuführen ist, aus dem letzten Bild, des erneuten Festlegens eines Bereichs, der durch Entfernen des Reflexionslichtbereichs aus dem Detektionsbereich erhalten wird, als Detektionsbereich und des Detektierens der Walzanomalie auf der Grundlage der Luminanzdaten der Pixel in dem neu festgelegten Detektionsbereich umfasst.

## Revendications

1. Appareil de détection d'anomalie configuré pour détecter une anomalie de laminage sur une surface d'une tôle métallique (1) laminée par un laminoir, l'appareil de détection d'anomalie comprenant :
une caméra (81, 82) configurée pour capturer une image de la tôle métallique (1) dont l'anomalie doit être détectée ; et
une section (92) de traitement d'image configurée pour diviser des données de luminance de pixels dans une plage de la tôle métallique (1) à partir de l'image capturée par la caméra (81, 82) en trois composantes d'une valeur R, d'une valeur V, et d'une valeur B,
**caractérisé en ce que**
la section (92) de traitement d'image est configurée pour détecter une anomalie de laminage sur la surface de la tôle métallique (1) sur la base d'une relation entre les données de luminance de deux composantes parmi les données de luminance des trois composantes ; et **en ce que**
l'appareil de détection d'anomalie comprend en outre une base de données configurée pour stocker des informations relatives à
une première limite de valeur de seuil déterminée au préalable pour diviser une valeur normale et une valeur anormale l'une de l'autre à partir d'une distribution produite par traçage, à partir d'une pluralité recueillie de données d'images représentant des données normales et anormales, sur un graphique bidimensionnel d'une combinaison de deux composantes, de données de luminance d'une composante d'une valeur R, d'une valeur V, et d'une valeur B de la combinaison de deux composantes et de données de luminance d'une autre composante de la combinaison de deux composantes, et
une deuxième limite de valeur de seuil déterminée au préalable pour diviser une valeur normale et une valeur anormale l'une de l'autre à partir d'une distribution produite par traçage, à partir de la pluralité recueillie de données d'images, sur un graphique bidimensionnel d'une autre combinaison de deux composantes, de données de luminance d'une composante de l'autre combinaison de deux composantes et de données de luminance d'une autre composante de l'autre combinaison de deux composantes,
dans lequel la section (92) de traitement d'image est configurée pour détecter une anomalie de laminage si un résultat détecté obtenu à partir des données de luminance des pixels dans la plage de la tôle métallique (1) de la combinaison de deux composantes parmi la valeur **R,** la valeur V, et la valeur B et de la première limite de valeur de seuil indique une anomalie et si un résultat détecté obtenu à partir des données de luminance des pixels dans la plage de la tôle métallique (1) de l'autre combinaison de deux composantes et de la deuxième limite de valeur de seuil indique une anomalie.

2. Appareil de détection d'anomalie selon la revendication 1, dans lequel la section (92) de traitement d'image utilise les données de luminance de la valeur V et de la valeur B.

3. Appareil de détection d'anomalie selon la revendication 1 ou 2, dans lequel
l'appareil de détection d'anomalie inclut en outre un appareil (67) d'éclairage pour éclairer la tôle métallique (1), et
la section (92) de traitement d'image est configurée pour définir une zone de détection de la tôle métallique (1) à partir d'une image la plus récente, définir une zone de lumière de réflexion sur la surface de la tôle métallique (1), la zone de lumière de réflexion étant due à une lumière d'éclairage provenant de l'appareil (67) d'éclairage, à partir de l'image la plus récente, définir une zone obtenue en supprimant la zone de lumière de réflexion de la zone de détection, comme une zone de détection à nouveau, et détecter l'anomalie de laminage sur la base des données de luminance des pixels dans la zone de détection définie à nouveau.

4. Procédé de détection d'anomalie pour détecter une anomalie de laminage sur une surface d'une tôle métallique (1) laminée par un laminoir, le procédé de détection d'anomalie comprenant :
une étape de capture d'image pour capturer par une caméra (81, 82) une image de la tôle métallique (1) dont l'anomalie doit être détectée ; et
une étape de traitement d'image pour diviser des données de luminance dans une plage de la tôle métallique (1) à partir de l'image capturée par la caméra (81, 82) en trois composantes d'une valeur R, d'une valeur V, et d'une valeur B,
**caractérisé en ce que**
l'étape de traitement d'image inclut la détection d'une anomalie de laminage sur la surface de la tôle métallique (1) sur la base d'une relation entre les données de luminance de deux composantes parmi les données de luminance des trois composantes ;
et **en ce que** le procédé comprend en outre une étape de stockage, dans une base de données, d'informations relatives à
une première limite de valeur de seuil déterminée au préalable pour diviser une valeur normale et une valeur anormale l'une de l'autre à partir d'une distribution produite par traçage, à partir d'une pluralité recueillie de données d'images représentant des données normales et anormales, sur un graphique bidimensionnel d'une combinaison de deux composantes, de données de luminance d'une composante d'une valeur R, d'une valeur V, et d'une valeur B de la combinaison de deux composantes et de données de luminance d'une autre composante de la combinaison de deux composantes, et
une deuxième limite de valeur de seuil déterminée au préalable pour diviser une valeur normale et une valeur anormale l'une de l'autre à partir d'une distribution produite par traçage, à partir de la pluralité recueillie de données d'images, sur un graphique bidimensionnel d'une autre combinaison de deux composantes, de données de luminance d'une composante de l'autre combinaison de deux composantes et de données de luminance d'une autre composante de l'autre combinaison de deux composantes,
dans lequel l'étape de traitement d'image inclut l'étape de détection d'une anomalie de laminage si un résultat détecté obtenu à partir des données de luminance des pixels dans la plage de la tôle métallique (1) de la combinaison de deux composantes parmi la valeur R, la valeur V, et la valeur B et de la première limite de valeur de seuil indique une anomalie et si un résultat détecté obtenu à partir des données de luminance des pixels dans la plage de la tôle métallique (1) de l'autre combinaison de deux composantes et de la deuxième limite de valeur de seuil indique une anomalie.

5. Procédé de détection d'anomalie selon la revendication 4, dans lequel l'étape de traitement d'image utilise les données de luminance de la valeur V et de la valeur B.

6. Procédé de détection d'anomalie selon la revendication 4 ou 5, dans lequel l'étape de traitement d'image inclut l'étape de définition d'une zone de détection de la tôle métallique (1) à partir d'une image la plus récente, de définition d'une zone de lumière de réflexion sur la surface de la tôle métallique (1), la zone de lumière de réflexion étant due à une lumière d'éclairage, à partir de l'image la plus récente, de définition d'une zone obtenue en supprimant la zone de lumière de réflexion de la zone de détection, comme une zone de détection à nouveau, et de détection de l'anomalie de laminage sur la base des données de luminance des pixels dans la zone de détection définie à nouveau.
